# EUROPEAN PATENT SPECIFICATION

(11) **EP 1 987 267 B1**
(45) Date of publication and mention of the grant of the patent: **03.10.2012**
(21) Application number: 07712258.8
(22) Date of filing: 21.02.2007
(51) Int. Cl.: F16D 65/12, F16D 69/00

(54) **BRAKE DISC**
BREMSSCHEIBE
DISQUE DE FREIN

(30) Priority: 21.02.2006 IT MI20060314
(43) Date of publication of application: 05.11.2008
(73) Proprietor: Mako Shark S.r.l., 23843 Dolzago (LC) (IT)
(72) Inventor: BONOMELLI, Federico, I-23843 Dolzago (LC) (IT)
(74) Representative: Fisauli, Beatrice A. M.
(86) International application number: PCT/EP2007/051643
(87) International publication number: WO 2007/096371

(56) References cited:
- WO-A-02/31376
- BE-A- 553 916
- DE-A1- 2 822 379
- DE-A1- 19 822 579
- FR-A1- 2 728 945
- GB-A- 2 228 053
- US-A- 3 478 849
- US-A1- 2004 178 029

## Description

This invention relates to a brake disc for use as a component of a braking unit, especially for high-performance motor vehicles and for on-road use.

The discs designed for the brake units of vehicles and motor vehicles, and all other means of transport or machinery, are usually made of spheroidal cast iron or steel, whereas discs deriving from the aeronautical industry, made of a carbon-carbon composite, are used for racing vehicles, especially Formula One vehicles.

As carbon-carbon discs only have high braking power at temperatures exceeding 200°C, their use is obviously limited to racing cars and aircraft, because these temperatures are only reached at all times in said uses. Said discs would be wholly ineffective in the case of the numerous small braking actions normally performed in town traffic, which drastically limits their use to the above-mentioned cases, even apart from their very high cost.

There is consequently a rather large gap between discs made from ordinary materials, such as cast iron and steel, and carbon-carbon discs, with the result that discs resembling those used for ordinary vehicles are also used for high-performance sports cars.

Said gap was recently filled by a carbon-ceramic disc which guarantees excellent performance and durability; however, as its cost is prohibitive, it has only been used on a very small number of vehicles. A large part of said cost is due to the fact that the grinding of said disc takes a great deal of time because it is very hard.

There are consequently a large number of vehicles, especially sports cars, but also top-of-range saloons, on which discs of higher quality than ordinary steel discs would undoubtedly be used if such discs cost less than said carbon-ceramic discs.

Steel or cast iron discs have the advantage of low cost and good braking ability, together with excellent mechanical strength.

As regards the problem of the large amount of heat developed during braking, radial channels have been created for the passage of cooling air, while to limit mechanical stresses which are a direct result of heat stresses, discs have been made which float in relation to the bell support that connects said discs to the wheel hub. The reason for this latter solution is that the thermal pulse stresses to which the discs are subject due to the braking action cause uneven heating on the surface and in the mass of the disc, with the result that the disc is warped, causing abnormal forces in the bell support that connects the disc to the hub.

However, steel and cast iron discs are heavy, and this is particularly undesirable as unsuspended masses (those present when the vehicle is on the ground) are increased, and as the gyroscopic effect of the wheels, with adverse effects on the stability and drivability of the vehicle.

As all the discs according to the prior art, including carbon-carbon discs, are made from a material which simultaneously performs both a structural and a braking function, attempts have been made to use light materials with high mechanical strength to perform the structural function, which said materials are given surface treatments or covered with other materials with higher wear resistance to perform the braking function.

The latter include an aluminium alloy disc with a ceramic coating. This solution seems to solve the problems raised, but the great difference between the heat dilation coefficients of the two materials inevitably causes cracks and breaks in the coating.

The international patent application WO 02/31376 A1 discloses a brake disc which involves the use of two materials, one to perform the structural function and one to perform the braking function, said brake disc comprising a support or structural disc on the sides of which are fitted a first and second friction disc and which said friction discs are made of a material suitable to perform the bracking function.

Thus a material which is particularly light and strong, but not very wear-resistant, can be used for the structural function, while a very hard material, which is consequently resistant to wear and very high temperatures, is used for the braking function. The latter material may be heavy, as only thin plates are needed.

The result is a disc-shaped support, made with the structural material, which is clad with plates of a material that is hard enough to be abrasion-resistant.

The purpose of this invention is to offer a disc for braking units as claimed in claim 1, still based on the separation of the braking function and the structural function. As a composite structural disc is less subject to heat stress, it can also be made with less expensive materials and processes. The braking material comprises a pair of e.g. very thin friction discs which cover a structural disc made of a strong, light material.

As will be seen from the description below, said friction discs, which perform the braking function, are mounted on the structural disc essentially via the same bolts with which said structural disc is connected to the bell connecting the disc to the hub. There may also be additional mechanical connections on the outer circumference of the discs, which could be made with clinched rivets or welded pins, said connections having the primary function of ensuring the planarity of the friction tracks under all conditions.

The inner disc, which acts as the structural part of the brake disc, can be made of a fibre-based composite material such as carbon fibre or fibreglass, impregnated with resins such as epoxy, phenolic, cyanoester, cyanoepoxy, ceramic resins and enamel or a combination thereof, or mortars of cement, while the friction discs can be made of any wear-resistant conventional material such as steel, cast iron, hardened aluminium, aluminium oxide (ceramic), silicon carbide, silicon nitride, titanium carbide or carbon-ceramic.

The friction discs must be able to dilate under the effect of temperature increases without any deformation of their plane. For this reason, open-ended radial slots are made all over the surface of the friction discs.

A first advantage of the discs according to the invention is basically financial, because the absence of bonded connections between the friction material and the structural material eliminates the need for expensive materials and manufacturing processes.

A second advantage, again financial, is due to the fact that the friction discs are removable, being connected with the same bolts that connect the structural disc to the bell support which connects it to the hub. This means that the inexpensive friction discs can be replaced, while the far more expensive structural part can be reused, because it has not deteriorated.

The invention will now be described according to a preferred embodiment, with reference to the annexed figures, wherein:
- figure 1 shows a disc not according to the invention;
- figure 2 shows an exploded view of the structure of a disc not according to the invention;
- figure 3 shows a different embodiment of the disc not according to the invention;
- figure 4 shows an alternative way of making radial cooling channels.

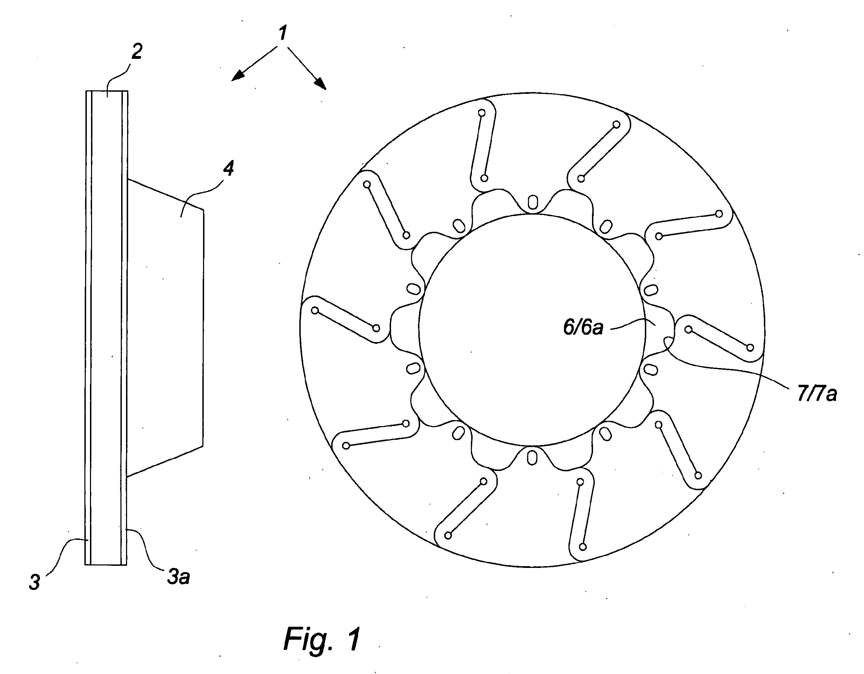

In fig. 1, no. (1) indicates a brake disc which comprises a structural part or disc (2), which acts as support for a pair of thin discs or friction discs (3, 3a), made of a wear-resistant material, that perform the braking function, and means designed to connect said friction discs (3, 3a) to said structural disc (2) and to connect said structural disc (2) to a bell support (4), which serves for the connection to the wheel hub (not illustrated).

Open-ended slits (30), with a mainly radial development, are made in friction discs (3, 3a) to allow said friction discs to dilate freely, without warping.

Said slits allow the friction discs to absorb the circumferential dilations, preventing the formation of compressive forces which would cause movements normal to the plane of said discs, with a consequent loss of planarity of the friction tracks. This ensures that friction discs (3, 3a) are monolithic and prevents twisting moments from arising on the means connecting said friction discs (3, 3a) to structural disc (2).

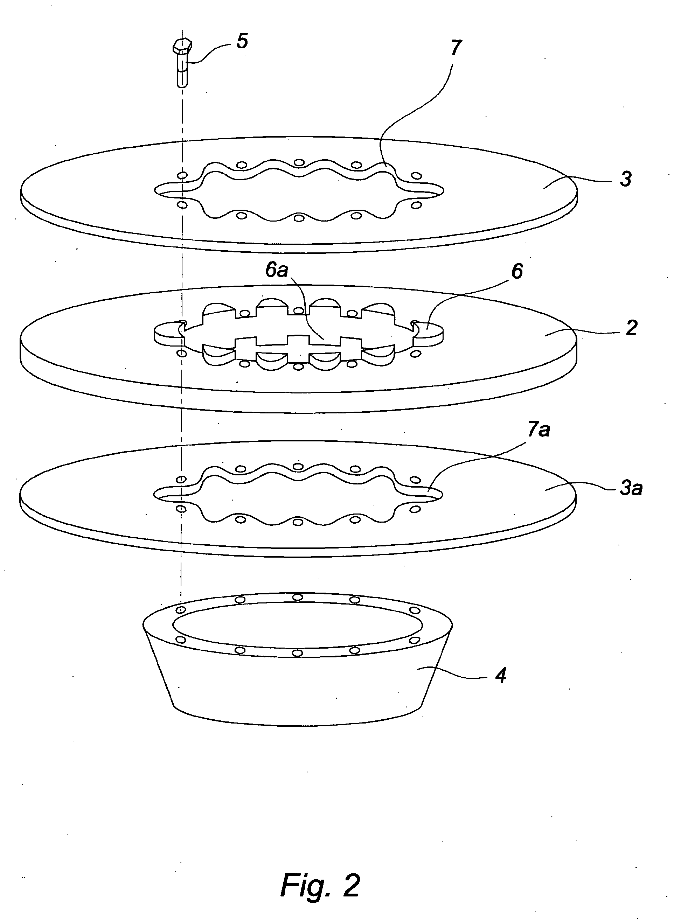

In accordance with a first form of embodiment (fig. 2), said means of connection comprise a plurality of bolts (5) which run through outer friction disc (3), structural disc (2) and inner friction disc (3a), and are screwed into threaded holes in the bell support (4).

This solution means that friction discs (3, 3a) can easily be replaced when worn.

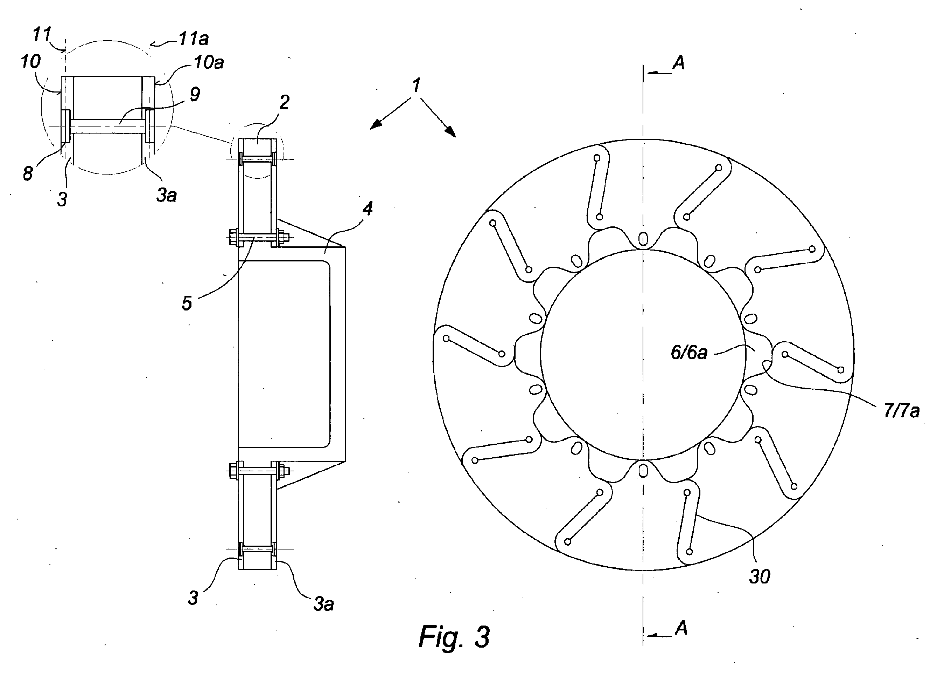

According to a second form of embodiment, said means of connection comprise a plurality of bolts with nuts or rivets with clinched heads (not illustrated), which connect the two friction discs (3, 3a) to structural disc (2) only. If the material used to make structural disc (2) so allows, the bolts can be screwed directly onto structural disc (2). According to this latter form of embodiment, structural disc (2) should be connected in turn to bell support (4), unless structural disc (2) and bell support (4) are made in a single piece, as shown in fig. 3.

According to a third preferred form of embodiment, said means of connection of friction discs (3, 3a) to structural disc (2) also include ridges (6, 6a), made on structural disc (2), which are inserted into corresponding seatings (7, 7a) made in friction discs (3, 3a), in order to improve the coupling by more effectively transmitting the braking moment from friction discs (3, 3a) to structural disc (2), and thence to bell support (4).

The detail in fig. 3 illustrates the case in which friction discs (3, 3a) are also connected to structural disc (2) in the outer part. In this case, it is preferable to make recesses (8) into which clinched rivets (9) are inserted, so as not to increase the diameter of the disc. In this way the head of said rivets (9) is far enough below the braking surfaces or friction tracks (10, 10a) to allow them to wear until they reach level (11, 11a), indicated with dotted lines, without significantly affecting the head of rivets (9).

Said further connection, made along the outer circumference of the brake disc, is designed to prevent any movement of friction discs (3, 3a) in a direction normal to their plane, so as to maintain the planarity of friction tracks (10, 10a).

As an alternative to clinched rivets (9), pins (not illustrated) could be welded to friction discs (3, 3a).

Structural disc (2) and bell support (4) are made from a material with low density and high mechanical characteristics. Said structural material could be metallic (e.g. titanium or some aluminium alloys such as ergal or avional), or, according to the present invention, a composite material (e.g. carbon fibres or fibreglass, or a suitable combination thereof, impregnated with epoxy, phenolic, cyanoester, cyanoepoxy, ceramic resins and enamel or a combination thereof, or mortars of cement).

If threaded holes are made in bell support (4), said bell support should be made of a metallic material. For structural disc (2) it is preferable to use a composite material, which is lighter, because it gives the best results in reducing the moment of inertia due to the much greater diameter of structural disc (2).

However, structural disc (2) and bell support (4) can also be made in a single piece, as mentioned above and illustrated in fig. 3.

The connection between friction discs (3, 3a) and structural disc (2) could be made close to the inner or outer circumference of said friction discs (3, 3a), or on both. Said ridges (6, 6a) on structural disc (2) may be used to transmit the braking moment more effectively.

In practice, depending on the requirements to be met during commissioning, various combinations of said connections could be used, with the main purpose of maintaining the planarity of the friction tracks (10, 10a) as far as possible despite the violent heat shocks.

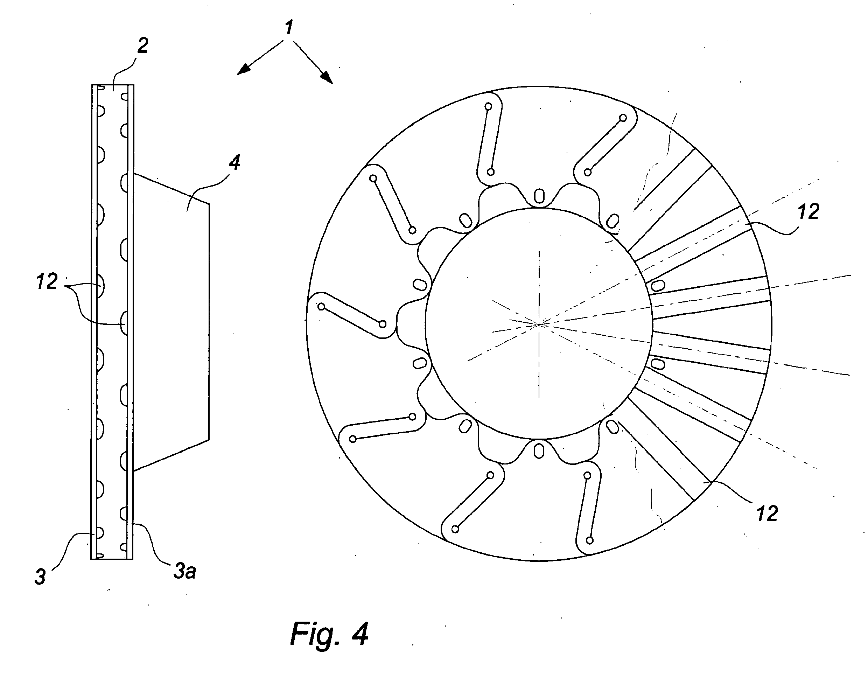

Fig. 4 shows an alternative method of making radial disc-cooling channels (12). In view of the existence of friction discs (3, 3a), radial grooves can be formed on the outer surface of structural disc (2). Said radial channels (12) will therefore be formed simply by assembling friction discs (3, 3a).

If the structural disc is made of a composite material, the radial grooves could be made by suitably shaping the moulds, as in the case of metal structural discs, if made by casting.

In the case of discs made of composite material, account must be taken of the deformation of the fibres in order to prevent curling and/or laceration during the pressing stage. This solution achieves a certain weight reduction, and consequently a cost reduction, due to the smaller amount of material used, without any additional manufacturing costs.

The pair of friction discs (3, 3a) could be made of any conventional material, such as steel, cast iron, hardened aluminium, aluminium oxide (ceramic), silicon carbide, silicon nitride, titanium carbide or carbon-ceramic. However, if costs are to be minimised in order to extend the field of use as far as possible, it is preferable to use cast iron or steel; although they are less wear-resistant than other friction materials, this not is a serious limitation, as said friction discs (3, 3a) are easily replaceable.

As will clearly be seen from the above description, structural bonding is completely eliminated which, due to the extreme operating conditions, requires the use of very expensive materials and processes. Moreover, the fact that friction discs (3, 3a), which are quite cheap if they are made of conventional materials like cast iron or steel, can easily be replaced, means that structural disc (2), which is the most expensive component in the unit, can be reused.

This invention has been described by way of example but not of limitation according to a preferred form of embodiment. One skilled in the art could devise numerous other embodiments, all of which fall into the ambit of protection of the following claims.

## Claims

1. Brake disc for use as a component of a braking unit, particularly for high-performance motor vehicles and for road use, of the type which involves the use of two materials, one to perform the structural function and one to perform the braking function, said brake disc comprising a support or structural disc (2), on the sides of which are fitted a first and second friction disc (3, 3a), and which said friction discs (3, 3a) are made of a material suitable to perform the braking function, means designed to connect said friction discs (3, 3a) to said structural disc (2) being provided, **characterised in that** said structural disc (2) is made of composite material.

2. Brake disc as claimed in claim 1, **characterised in that** said structural disc (2) and said friction discs (3, 3a) are further connected to a bell support (4) designed to connect said brake disc (1) to the wheel hub.

3. Brake disc as claimed in claim 2, **characterised in that** said bell support (4) is made of composite material.

4. Brake disc as claimed in claim 2, **characterised in that** said bell support (4) is made of metallic material.

5. Brake disc as claimed in claim 2, **characterised in that** said metallic material is titanium or an aluminium alloy.

6. Brake disc as claimed in claims 1 and 3, **characterised in that** said composite material comprises carbon fibres, fibreglass or a combination thereof.

7. Brake disc as claimed in claims 1 and 3, **characterised in that** said composite material comprises a resin chosen from among the epoxy, phenolic, cyanoester, cyanoepoxy, ceramic resins and enamel or a combination thereof.

8. Brake disc as claimed in claims 1 and 3, **characterised in that** said composite material includes a mortar of cement.

9. Brake disc as claimed in claim 1, **characterised in that** said means designed to connect said friction discs (3, 3a) to said structural disc (2) comprise a plurality of bolts (5) which pass through said first friction disc (3), said structural disc (2) and said second friction disc (3a), and are screwed into threaded holes in said bell support (4) designed to connect said brake disc (1) to the wheel hub.

10. Brake disc as claimed in claim 1 or 2, **characterised in that** said means designed to connect said friction discs (3, 3a) to said structural disc (2) comprise a plurality of bolts with nuts which connect said friction discs (3, 3a) to said structural disc (2).

11. Brake disc as claimed in claim 10, **characterised in that** said bolts are screwed directly to said structural disc (2).

12. Brake disc as claimed in claim 1 or 2, **characterised in that** said means designed to connect said friction discs (3, 3a) to said structural disc (2) comprise a plurality of rivets (9), with clinched heads, which connect said friction discs (3, 3a) to said structural disc (2).

13. Brake disc as claimed in claim 12, **characterised in that** it contains recesses (8) are provided into which said heads of said rivets (9) are inserted in such a way that the head of said rivets (9) is far enough below the braking surfaces or friction tracks (10, 10a) to allow said friction tracks (10, 10a) to wear, without substantially affecting the head of said rivets (9).

14. Brake disc as claimed in claim 1 or 2, **characterised in that** said means designed to connect said friction discs (3, 3a) to said structural disc (2) comprise a plurality of pins that connect said friction discs (3, 3a) to said structural disc (2), which said pins are welded to said friction discs (3, 3a).

15. Brake disc as claimed in claim 2, **characterised in that** said structural disc (2) and said bell support (4) are made in a single piece.

16. Brake disc as claimed in claim 1 or 2, **characterised in that** said means designed to connect said friction discs (3, 3a) to said structural disc (2) comprise ridges (6, 6a), which are inserted into corresponding seatings (7, 7a) formed in said friction discs (3, 3a), which said ridges (6, 6a) and said seatings (7, 7a) are designed to transmit the braking moment more effectively from said friction discs (3, 3a) to said structural disc (2).

17. Brake disc as claimed in at least one of claims 1 to 16, **characterised in that** said connections between said friction discs (3, 3a) and said structural disc (2) are made close to the inner circumference of said friction discs (3, 3a).

18. Brake disc as claimed in at least one of claims 1 to 16, **characterised in that** said connections between said friction discs (3, 3a) and said structural disc (2) are made close to the outer circumference of said friction discs (3, 3a).

19. Brake disc as claimed in at least one of claims 1 to 18, **characterised in that** said friction discs (3, 3a) are made from a material selected from among steel, cast iron, hardened aluminium, aluminium oxide (ceramic), silicon carbide, silicon nitride, titanium carbide and carbon-ceramic.

20. Brake disc as claimed in at least one of claims 1 to 19, **characterised in that** it includes open-ended slits (30) with a mainly radial development made in said friction discs (3, 3a), which are designed to allow said friction discs (3, 3a) to dilate freely, without warping.

21. Brake disc as claimed in at least one of claims 1 to 20, **characterised in that** it includes grooves with a substantially radial pattern, made on the outer surface of said structural disc (2), in such a way that channels (12) are formed when said friction discs (3, 3a) are mounted on said structural disc (2).

## Patentansprüche

1. Bremsscheibe zum Gebrauch als Bestandteil einer Bremseinheit insbesondere für Hochleistungs-Kraftfahrzeuge und für den Straßeneinsatz, der Art, die auf der Verwendung von zwei Materialien beruht, eines zum Erfüllen der strukturellen Funktion und eines zum Erfüllen der Bremsfunktion, wobei genannte Bremsscheibe eine Träger- oder strukturelle Scheibe (2) umfasst, deren Seiten mit einer ersten und einer zweiten Reibscheibe (3, 3a) ausgerüstet sind und wobei genannte Reibscheiben (3, 3a) aus geeignetem Material zum Erfüllen der Bremsfunktion hergestellt sind und ferner Mittel zum Verbinden der genannten Reibscheiben (3, 3a) mit der genannten strukturellen Scheibe (2) vorgesehen sind, **dadurch gekennzeichnet, dass** genannte strukturelle Scheibe (2) aus Verbundmaterial hergestellt ist.

2. Bremsscheibe nach Anspruch 1, **dadurch gekennzeichnet, dass** die genannte strukturelle Scheibe (2) und die genannten Reibscheiben (3, 3a) weiters mit einem Glockenträger (4) verbunden sind, der so ausgebildet ist, dass er die genannte Bremsscheibe (2) mit der Radnabe verbindet.

3. Bremsscheibe nach Anspruch 2, **dadurch gekennzeichnet, dass** genannter Glockenträger (4) aus Verbundmaterial hergestellt ist.

4. Bremsscheibe nach Anspruch 2, **dadurch gekennzeichnet, dass** genannter Glockenträger (4) aus metallischem Werkstoff hergestellt ist.

5. Bremsscheibe nach Anspruch 2, **dadurch gekennzeichnet, dass** genannter metallischer Werkstoff Titan oder eine Aluminiumlegierung ist.

6. Bremsscheibe nach Anspruch 1 und 3, **dadurch gekennzeichnet, dass** genanntes Verbundmaterial aus Carbonfaser, Fiberglas oder einer Kombination aus diesen besteht.

7. Bremsscheibe nach Anspruch 1 und 3, **dadurch gekennzeichnet, dass** genanntes Verbundmaterial aus einem Harz wahlweise zwischen Epoxid-, Phenol-, Cyanatester-, Cyanepoxid-, Keramikharzen und Email oder einer Kombination aus diesen besteht.

8. Bremsscheibe nach Anspruch 1 und 3, **dadurch gekennzeichnet, dass** genanntes Verbundmaterial auch Zementmörtel umfasst.

9. Bremsscheibe nach Anspruch 1, **dadurch gekennzeichnet, dass** genannte Mittel zum Verbinden der genannten Reibscheiben (3, 3a) mit genannter struktureller Scheibe (2) eine Mehrzahl von Bolzen (5) umfasst, die durch die genannte erste Reibscheibe (3), die genannte strukturelle Scheibe (2) und die genannte zweite Reibscheibe (3a) verlaufen und in Gewindebohrungen in genanntem Glockenträger (4) eingeschraubt sind, der so ausgebildet ist, dass er die genannte Bremsscheibe (2) mit der Radnabe verbindet.

10. Bremsscheibe nach Anspruch 1 oder 2, **dadurch gekennzeichnet, dass** die zum Verbinden der genannten Reibscheiben (3, 3a) mit der genannten strukturellen Scheibe (2) bestimmten Mittel aus einer Mehrzahl von Schrauben und Muttern bestehen, welche die genannten Reibscheiben (3, 3a) mit der genannten strukturellen Scheibe (2) verbinden.

11. Bremsscheibe nach Anspruch 10, **dadurch gekennzeichnet, dass** genannte Schrauben direkt auf die strukturelle Scheibe (2) geschraubt werden.

12. Bremsscheibe nach Anspruch 1 oder 2, **dadurch gekennzeichnet, dass** die zum Verbinden der genannten Reibscheiben (3, 3a) mit der genannten strukturellen Scheibe (2) bestimmten Mittel aus einer Mehrzahl von Nieten (9) mit Schließköpfen bestehen, welche die genannten Reibscheiben (3, 3a) mit der genannten strukturellen Scheibe (2) verbinden.

13. Bremsscheibe nach Anspruch 12, **dadurch gekennzeichnet, dass** sie Ausnehmungen (8) enthält, in welche die genannten Köpfe der genannten Niete (9) so eingesetzt sind, dass der Kopf der genannten Niete (9) ausreichend unterhalb der Bremsflächen oder der Reibspuren (10,10a) liegt, sodass sich die genannten Reibspuren (10,10a) abnutzen, ohne im Wesentlichen den Kopf der genannten Niete (9) zu beeinträchtigen.

14. Bremsscheibe nach Anspruch 1 oder 2, **dadurch gekennzeichnet, dass** die zum Verbinden der genannten Reibscheiben (3, 3a) mit der genannten strukturellen Scheibe (2) bestimmten Mittel aus seiner Mehrzahl von Stiften bestehen, welche die genannten Reibscheiben (3, 3a) mit genannter struktureller Scheibe (2) verbinden, wobei die genannten Stifte an genannte Reibscheiben (3, 3a) angeschweißt sind.

15. Bremsscheibe nach Anspruch 2, **dadurch gekennzeichnet, dass** genannte strukturelle Scheibe (2) und genannter Glockenträger (4) in einem Stück hergestellt sind.

16. Bremsscheibe nach Anspruch 1 oder 2, **dadurch gekennzeichnet, dass** die zum Verbinden der genannten Reibscheiben (3, 3a) mit der genannten strukturellen Scheibe (2) bestimmten Mittel aus Stegen (6, 6a) bestehen, welche in entsprechende in den genannten Reibscheiben (3, 3a) ausgebildeten Aufnahmen (7, 7a) eingesetzt sind, wobei genannte Stege (6, 6a) und genannte Aufnahmen (7, 7a) so ausgebildet sind, dass das Bremsmoment von den genannten Reibscheiben (3, 3a) zur genannten strukturellen Scheibe (2) auf wirksamere Weise übertragen wird.

17. Bremsscheibe nach mindestens einem der Ansprüche 1 bis 16, **dadurch gekennzeichnet, dass** genannte Verbindungen zwischen den genannten Reibscheiben (3, 3a) und der genannten strukturellen Scheibe (2) in der Nähe des inneren Umfangs der genannten Reibscheiben (3, 3a) hergestellt sind.

18. Bremsscheibe nach mindestens einem der Ansprüche 1 bis 16, **dadurch gekennzeichnet, dass** genannte Verbindungen zwischen den genannten Reibscheiben (3, 3a) und der genannten strukturellen Scheibe (2) in der Nähe des äußeren Umfangs der genannten Reibscheiben (3, 3a) hergestellt sind.

19. Bremsscheibe nach mindestens einem der Ansprüche 1 bis 18, **dadurch gekennzeichnet, dass** genannte Reibscheiben (3, 3a) aus einem zwischen Stahl, Gusseisen, gehärtetem Aluminium, Aluminiumoxid (Keramik), Siliciumcarbid, Siliciumnitrid, Titancarbid und Carbon-Keramik gewähltem Material hergestellt sind.

20. Bremsscheibe nach mindestens einem der Ansprüche 1 bis 19, **dadurch gekennzeichnet, dass** sie offene Schlitze (30) mit einer im wesentlichen radialen Entwicklung in den genannten Reibscheiben (3, 3a) umfasst, so ausgebildet, dass genannte Reibscheiben (3, 3a) sich frei ausdehnen können, ohne sich zu verziehen.

21. Bremsscheibe nach mindestens einem der Ansprüche 1 bis 20, **dadurch gekennzeichnet, dass** sie mit Nuten in einem im wesentlichen radialen Muster auf der äußeren Oberfläche der genannten strukturellen Scheibe (2) derart versehen ist, dass sich Kanäle (12) bilden, wenn die genannten Reibscheiben (3, 3a) auf die genannte strukturelle Scheibe angebracht werden.

## Revendications

1. Disque de frein destiné à une utilisation comme composant d'une unité de freinage, en particulier pour les véhicules à moteur à haute performance et sur route, recourant à l'utilisation de deux matériaux, l'un ayant une fonction structurelle et l'autre une fonction de freinage, ledit disque de frein comprenant un support ou disque structurel (2), sur les côtés duquel sont montés un premier et un deuxième disque de frottement (3, 3a), et où lesdits disques de frottement (3, 3a) sont fait d'un matériau convenant pour remplir la fonction de freinage, les moyens conçus pour assembler lesdits disques de frottement (3, 3a) audit disque structurel (2) étant fournis, **caractérisé en ce que** ledit disque structurel (2) est fait d'un matériau composite.

2. Disque de frein selon la revendication 1, **caractérisé en ce que** ledit disque structurel (2) et lesdits disques de frottement (3, 3a) sont de plus assemblés à un support de cloche (4) conçu pour relier ledit disque de frein (1) au moyeu de roue.

3. Disque de frein selon la revendication 2, **caractérisé en ce que** ledit support de cloche (4) est en matériau composite.

4. Disque de frein selon la revendication 2, **caractérisé en ce que** ledit support de cloche (4) est en matériau métallique.

5. Disque de frein selon la revendication 2, **caractérisé en ce que** ledit matériau métallique est du titane ou un alliage d'aluminium.

6. Disque de frein selon les revendications 1 et 3, **caractérisé en ce que** ledit matériau composite est fait de fibres de carbone, de fibres de verre ou d'un mélange des deux.

7. Disque de frein selon les revendications 1 et 3, **caractérisé en ce que** ledit matériau composite est constitué d'une résine choisie parmi les résines époxy, phénoliques, cyano-ester, cyano-époxy, céramiques et de l'émail ou d'un mélange de ceux-ci.

8. Disque de frein selon les revendications 1 et 3, **caractérisé en ce que** ledit matériau composite comprend un mortier de ciment.

9. Disque de frein selon la revendication 1, **caractérisé en ce que** lesdits moyens conçus pour assembler lesdits disques de frottement (3, 3a) audit disque structurel (2) sont formés de plusieurs boulons (5) qui passent à travers ledit premier disque de frottement (3), ledit disque structurel (2) et ledit deuxième disque de frottement (3a), et qui sont vissés dans les perçages filetés dudit support de cloche (4) conçu pour assembler ledit disque de frein (1) au moyeu de roue.

10. Disque de frein selon la revendication 1 ou la revendication 2, **caractérisé en ce que** lesdits moyens conçus pour assembler lesdits disques de frottement (3, 3a) audit disque structurel (2) sont formés de plusieurs boulons avec écrous qui assemblent lesdits disques de frottement (3, 3a) audit disque structurel (2).

11. Disque de frein selon la revendication 10, **caractérisé en ce que** lesdits boulons sont vissés directement sur ledit disque structurel (2).

12. Disque de frein selon la revendication 1 ou la revendication 2, **caractérisé en ce que** lesdits moyens conçus pour assembler lesdits disques de frottement (3, 3a) audit disque structurel (2) sont formés de plusieurs rivets (9) à têtes rivetées, qui assemblent lesdits disques de frottement (3, 3a) audit disque structurel (2).

13. Disque de frein selon la revendication 12, **caractérisé en ce qu'**il a des cavités (8) dans lesquelles lesdites têtes desdits rivets (9) sont insérées de manière à ce que la tête desdits rivets (9) soit suffisamment au-dessous des surfaces de freinage ou des pistes de frottement (10, 10a) afin de permettre auxdites pistes de frottement (10, 10a) de s'user, sans affecter particulièrement la tête desdits rivets (9).

14. Disque de frein selon la revendication 1 ou la revendication 2, **caractérisé en ce que** lesdits moyens conçus pour assembler lesdits disques de frottement (3, 3a) audit disque structurel (2) sont formés de plusieurs goupilles qui assemblent lesdits disques de frottement (3, 3a) audit disque structurel (2), où lesdites goupilles sont soudées auxdits disques de frottement (3, 3a).

15. Disque de frein selon la revendication 2, **caractérisé en ce que** ledit disque structurel (2) et ledit support de cloche (4) forment une seule pièce.

16. Disque de frein selon la revendication 1 ou la revendication 2, **caractérisé en ce que** lesdits moyens conçus pour assembler lesdits disques de frottement (3, 3a) audit disque structurel (2) sont formés de saillies (6, 6a) qui sont insérées dans les logements correspondants (7, 7a) prévus dans lesdits disques de frottement (3, 3a), où lesdites saillies (6, 6a) et lesdits logements (7, 7a) sont conçus pour transmettre le couple de freinage de manière plus efficace desdits disques de frottement (3, 3a) audit disque structurel (2).

17. Disque de frein selon au moins l'une des revendications de 1 à 16, **caractérisé en ce que** lesdits assemblages entre lesdits disques de frottement (3, 3a) et ledit disque structurel (2) sont faits près de la circonférence intérieure desdits disques de frottement (3, 3a).

18. Disque de frein selon au moins l'une des revendications de 1 à 16, **caractérisé en ce que** lesdits assemblages entre lesdits disques de frottement (3, 3a) et ledit disque structurel (2) sont faits près de la circonférence extérieure desdits disques de frottement (3, 3a).

19. Disque de frein selon au moins l'une des revendications de 1 à 18, **caractérisé en ce que** lesdits disques de frottement (3, 3a) sont composés d'un matériau choisi parmi l'acier, la fonte, l'aluminium durci, l'oxyde d'aluminium (céramique), le carbure de silicium, le nitrure de silicium, le carbure de titane et le carbone-céramique.

20. Disque de frein selon au moins l'une des revendications de 1 à 19, **caractérisé en ce qu'**il comporte des fentes ouvertes (30) réparties principalement de manière radiale sur lesdits disques de frottement (3, 3a), et qui sont conçues de façon à permettre auxdits disques de frottement (3, 3a) de se dilater librement, sans qu'il y ait de déformation.

21. Disque de frein selon au moins l'une des revendications de 1 à 20, **caractérisé en ce qu'**il comporte des rainures disposées fondamentalement de manière radiale sur la surface extérieure dudit disque structurel (2) de façon à ce que des canaux (12) se forment quand lesdits disques de frottement (3, 3a) sont montés sur ledit disque structurel (2).
